# EUROPÄISCHE PATENTSCHRIFT

(11) **EP 1 350 655 B1**
(45) Veröffentlichungstag und Bekanntmachung des Hinweises auf die Patenterteilung: **07.12.2005**
(21) Anmeldenummer: 03100566.3
(22) Anmeldetag: 07.03.2003
(51) Int. Cl.: B60K 15/04

(54) **Verriegelungseinrichtung für eine Tankklappe**
Automotive fuel cap lockout mechanism
Mécanisme de verrouillage pour un bouchon de réservoir de carburant

(30) Priorität: 22.03.2002 DE 10212783
(43) Veröffentlichungstag der Anmeldung: 08.10.2003
(73) Patentinhaber: Hella KGaA Hueck & Co., 59552 Lippstadt (DE)
(72) Erfinder: Muschner, Andreas, 33100, Paderborn (DE); Langkau, Johannes, 59556, Lippstadt (DE); Hoppe, Friedbert, 59558, Lippstadt (DE); Kleine-Weischede, Jost, 44289, Dortmund (DE)

(56) Entgegenhaltungen:
- DE-A- 19 702 251
- US-B1- 6 279 626
- PATENT ABSTRACTS OF JAPAN vol. 008, no. 028 (M-274), 7. Februar 1984 (1984-02-07) & JP 58 185325 A (NISSAN JIDOSHA KK), 29. Oktober 1983 (1983-10-29)

## Beschreibung

Die Erfindung betrifft eine Verriegelungseinrichtung für eine Tankklappe gemäß dem Oberbegriff des Anspruchs 1.

Verriegelungseinrichtungen sind für verschiedene Typen von Tankdeckeln vorgesehen.

Aus der JP(A) 58185325 ist eine Verriegelungsvorrichtung für einen Tankdeckel bekannt, der bei Entriegelung etwas angehoben und nach einer 180°-Drehung eine Tanköffnung freigibt. Dazu ist der Tankdeckel mit einer exzentrisch angeordneten Lasche versehen, die in einem Laschenraum der Verriegelungseinrichtung drehbar gehalten ist.

Eine in der US-B1-6279629 beschriebene Verriegelungseinrichtung ist für einen Tankdeckel vorgesehen, der als eine in das Innere eines Tankstutzens bewegbare Verschlussklappe ausgebildet ist.

Die Verriegelungsvorrichtung, die Gegenstand der Erfindung ist, ist für eine nach außen zu öffnende Tankklappe und zum Anschluss an Zentralverriegelungen von Kraftfahrzeugen vorgesehen.

Ein Zentralverriegelungselement für Türen oder Klappen von Kraftfahrzeugen mit einem Stellantrieb, der einen Stößel mit Endstellungen aufweist, und mit einer Stellstange, die mit dem Stößel gekuppelt ist, ist aus der DE 197 02 251 C1 bekannt. Die Stellstange weist ein Verriegelungselement mit einer Anlaufschräge auf.

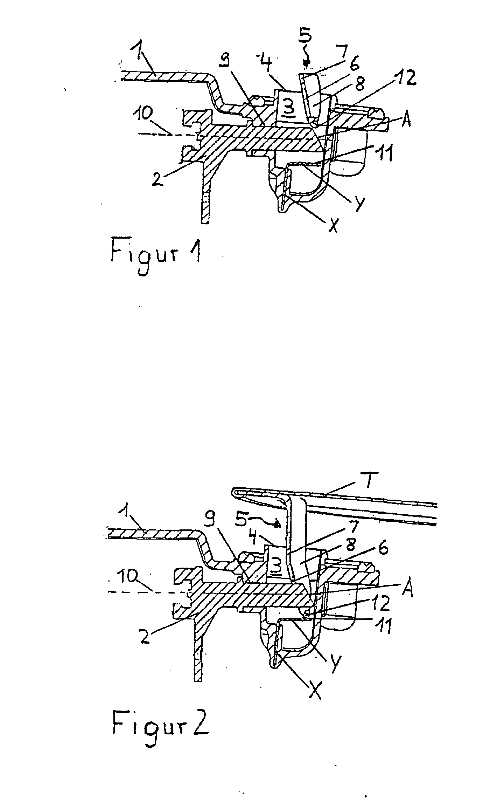

Der Anmelderin ist der Einsatz eines in der DE 197 02 251 C1 beschriebenen Verriegelungselement bei einer gattungsgemäßen Verriegelungseinrichtung bekannt, die im Folgenden als Stand der Technik anhand der Figuren 1 und 2 beschrieben ist. Eine Verriegelungseinrichtung für eine nach außen zu öffnende Tankklappe des Standes der Technik weist ein Gehäuse auf, in dem ein elektromotorischer Stellantrieb mit einem, im Folgenden als Verriegelungsbolzen bezeichneten Verriegelungselement angeordnet ist. Das Gehäuse bildet einen Laschenraum zur Aufnahme einer von der Tankklappe abstehenden Lasche, der oben zur Tankklappe hin mit einer Öffnung versehen ist. Der Verriegelungsbolzen ist durch eine Triebfeder in den Laschenraum ausfahrbar und elektromotorisch zurückfahrbar. Unterhalb des Weges des Verriegelungsbolzen befindet sich im Laschenraum ein federnder Auswerfer. Der Auswerfer des Standes der Technik ist als Blattfeder ausgebildet.

In einer Verriegelungsstellung ist die Lasche in den Laschenraum eingetaucht, wobei die Spitze der Lasche die Blattfeder ein wenig nach unten drückt. Der Verriegelungsbolzen ist ausgefahren, ragt durch eine Öffnung der Lasche und arretiert die Lasche durch den Federdruck seiner Triebfeder. Beim Entriegeln wird der Verriegelungsbolzen elektromotorisch aus der Öffnung der Lasche zurückgefahren. Sobald der Verriegelungsbolzen die Lasche freigibt, wird diese durch die Federkraft der Blattfeder nach oben gedrückt. Anschließend wird der Verriegelungsbolzen durch die Triebfeder wieder ausgefahren und befindet sich im Weg der Lasche. Beim manuellen Schließen der Tankklappe trifft die Spitze der Lasche auf die auch in der DE 197 02 251 C1 erwähnte Anlaufschräge des Verriegelungsbolzen und drückt den Verriegelungsbolzen gegen den Druck der Triebfeder soweit zurück, dass sie passieren kann und der Verriegelungsbolzen in die Öffnung der Lasche rutschen kann.

Ein Schließen der Tankklappe bei einer Verriegelungseinrichtung des Standes der Technik ist nur möglich, wenn die Spitze der Lasche auf die Anlaufschräge des Verriegelungsbolzen trifft. Dies ist jedoch aufgrund der vorliegenden Toleranzen der Bauteile nicht immer gewährleistet.

Aufgabe der Erfindung ist es, eine Verriegelungsvorrichtung gemäß dem Oberbegriff des Anspruchs 1 zu entwickeln, mit der ein sicheres Schließen der Tankklappe auch bei gewissen Toleranzen der Bauteile gewährleistet ist.

Die Aufgabe wird durch das kennzeichnende Merkmal des Anspruchs 1 gelöst.

Erfindungsgemäß wird der federnde Auswerfer so ausgebildet, dass er in den Weg des Verriegelungsbolzens fahrbar ist. Dazu kann ein die Federkraft bewirkendes Element des Auswerfers einen zum Ausfahren des Auswerfers oder eines Teils der Auswerfers ausreichend langen Federweg aufweisen. Ein ausreichend langer Federweg ermöglicht, den Auswerfer oder einen Teil des Auswerfers mit der Federkraft, mit der die Lasche beim Entriegeln nach oben, und zwar entlang des Laschenweges, gedrückt wird, gleichzeitig nach oben in den Weg des Verriegelungsbolzens zu bewegen und diesen in einer zurückgezogenen Position zu halten.

Zum Schließen wird der Auswerfer durch die Lasche zurück in seine Verriegelungsposition nach unten bewegt, wobei der Verriegelungsbolzen freigegeben wird und in die Öffnung der Lasche gleiten kann.

Beim Schließen trifft die Spitze der Lasche nicht auf den Verriegelungsbolzen sondern auf den Auswerfer, und zwar auf seine Aufsetzfläche, die zur Öffnung des Laschenraumes zeigt und sich im Laschenraum über eine bestimmte Fläche in etwa senkrecht zum Laschenweg, ggf. über den gesamten Querschnitt des Laschenraumes erstreckt. Beim Schließen kann damit die Spitze der Lasche auf eine beliebige Stelle der Aufsetzfläche des Auswerfers aufgesetzt werden. Ein sicheres Schließen der Tankklappe ist auch bei gewissen Toleranzen der Bauelemente möglich.

Die Ausbildung eines Auswerfers mit einem verschiebbarem Auswerferelement und mit einer Schraubenfeder gemäß Anspruch 2 ermöglicht, das Auswerferelement mit der Federkraft der Schraubenfeder in den Weg des Verriegelungsbolzens auszufahren. Eine Schraubenfeder kann einen zum Ausfahren des Auswerferelementes von der Verriegelungsstellung in den Weg des Verriegelungsbolzen ausreichenden Federweg aufweisen.

Eine Öffnung im Auswerferelement für die Schraubenfeder gemäß Anspruch 3 ermöglicht eine platzsparende Anordnung der Schraubenfeder.

Eine Zylinderform des Laschenraumes und des Auswerferelementes gemäß Anspruch 4 führt zu einer einfachen, platzsparenden Anordnung des Auswerfers.

Eine Aussparung mit einem unteren Vorsprung am Auswerferelement gemäß Anspruch 5 sichert das Auswerferelement gegen ein Herausfallen.

Ein schräger Verlauf nach oben an einer Stirnfläche des Verriegelungsbolzens gemäß Anspruch 6 verbessert das Gleiten des Verriegelungsbolzens über das Auswerferelement und in die Öffnung der Lasche.

Durch aneinander angepasste Formen des Verriegelungsbolzens und des Auswerfelementes im Bereich der Aussparung gemäß Anspruch 7 ist ein Formschluß zwischen dem Verriegelungsbolzen und dem Auswerferelement möglich. Dies sichert die Funktionsweise der Verriegelungseinrichtung.

Durch eine Erhebung auf dem Auswerferelement mit einer an die Form des Verriegelungsbolzens angepassten Führungsfläche gemäß Anspruch 8 wird der Verriegelungsbolzen entlang der Führungsfläche sicher über das Auswerferelement in die Bohrung der Lasche geführt.

Eine Führung für das Auswerferelement gemäß Anspruch 9 und eine Halterung für die Schraubenfeder gemäß Anspruch 10 verbessern das Ausfahren des Auswerferelementes in den Weg des Verriegelungsbolzens.

Eine zweite Öffnung im Mantel des Laschenraumes gemäß Anspruch 11, in die der Verriegelungsbolzen nach Durchqueren des Laschenraumes geführt wird, verbessert die Sicherheit der Arretierung der Lasche.

Der Stand der Technik und die Erfindung wird in der Zeichnung anhand schematisch dargestellter Beispiele weiter erläutert.

Die Figuren 1 bis 6 zeigen ausschnittsweise Schnitte durch Verriegelungseinrichtungen in einer Ebene, in der sich der Weg der Lasche und der Weg des Verriegelungsbolzen befinden. In der Zeichnung sind die Laschen und ggf. die Tankklappe oben angeordnet.

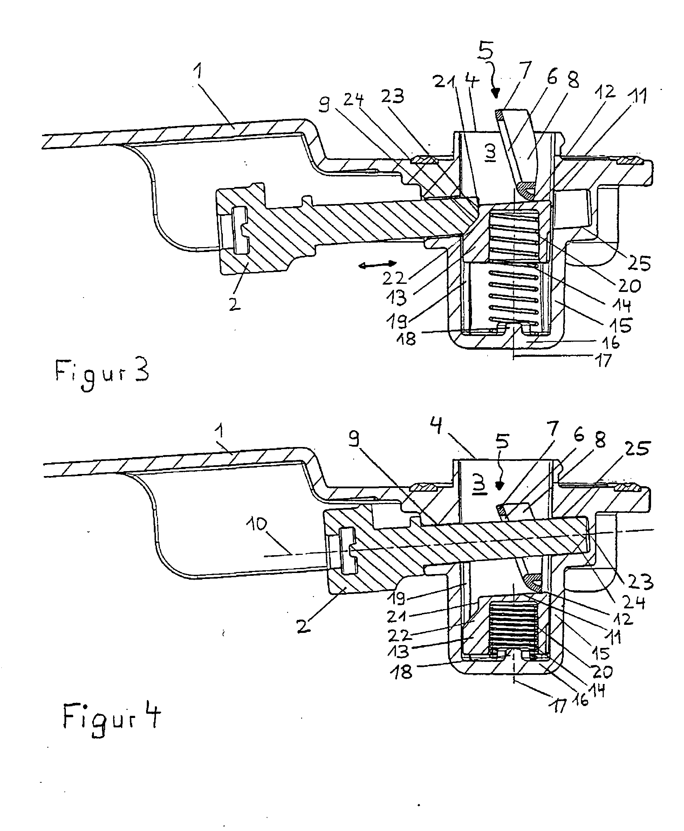

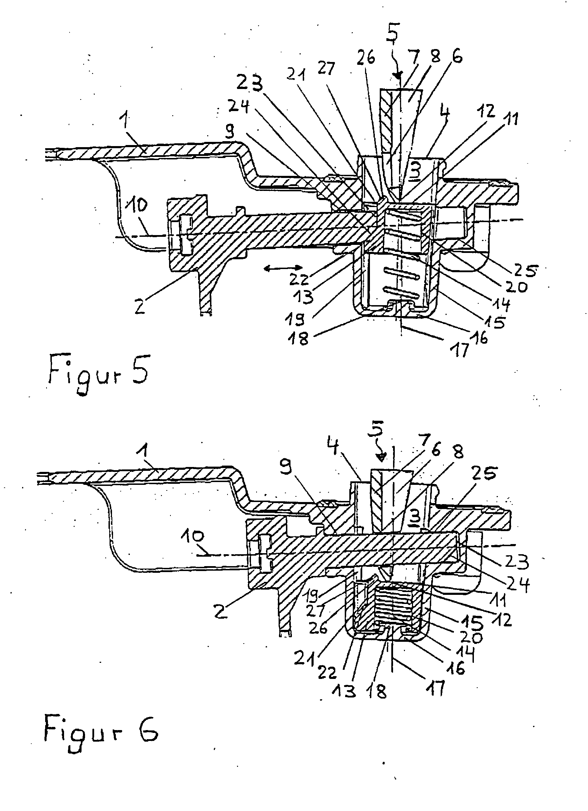

Eine Verriegelungseinrichtung des Standes der Technik ist in den Figuren 1 und 2, eine Verriegelungseinrichtung eines ersten erfindungsgemäßen Beispiels in den Figuren 3 und 4 und eine eines zweiten erfindungsgemäßen Beispiels in den Figuren 5 und 6 dargestellt. Die Figuren 1, 3 und 5 zeigen die Verriegelungseinrichtung in Entriegelungsstellung und die Figuren 2, 4 und 6 in Verriegelungsstellung.

### Stand der Technik:

Gegenstand der Erfindung ist eine Verriegelungseinrichtung für eine Tankklappe T, die ein nur ausschnittsweise in der Zeichnung dargestelltes Gehäuse 1 aufweist. In dem Gehäuse 1 ist ein elektromotorischer Stellantrieb angeordnet, von dem nur ein Verriegelungsbolzen 2 dargestellt ist. Durch das Gehäuse 1 ist ein länglicher Laschenraum 3 mit einer Öffnung 4 gebildet. Im eingebauten Zustand der Verriegelungseinrichtung weist die in der Zeichnung oben angeordnete Öffnung 4 zur Tankklappe T, so dass eine von der Tankklappe T abstehende Lasche 5 in den Laschenraum 3 eintauchen kann. In den Figuren 2 bis 6 ist nur ein unterer Abschnitt der Lasche 5 zu sehen. Die Lasche 5 weist in ihrem unteren Abschnitt eine Öffnung 6 auf, die als Bohrung oder Langloch ausgebildet sein kann. Die Lasche 5 wird durch ein Blechteil mit ausreichender Steifigkeit gebildet. Beispielsweise wird sie durch ein U-Profil gebildet, in dessen Bodenabschnitt 7 die Öffnung 6 angebracht ist und dessen Schenkelabschnitte 8 zur Erhöhung der Steifigkeit vorgesehen sind.

Der Verriegelungsbolzen 2 ist durch eine nicht dargestellte Triebfeder in den Laschenraum 3 ausfahrbar und elektromotorisch durch nicht dargestellte Elemente des Stellantriebes zurückfahrbar. Dieses Prinzip ist auch aus der DE 197 02 251 C1 bekannt. Der Verriegelungsbolzen 2 ist seitlich des Laschenraumes 3 auf der der Tankklappe T abgewandten Seite angeordnet und derart durch eine Öffnung 9 in dem den Laschenraum 3 bildenden Gehäuse 1 geführt, dass seine Stirnfläche A beim Eintauchen der Lasche 5 in den Laschenraum 3 auf die Öffnung 6 der Lasche 5 treffen und der Verriegelungsbolzen 2 durch die Öffnung 6 gleiten kann. Der Weg des Verriegelungsbolzens 2 entspricht der Verbindungslinie entlang seiner Achse 10 zwischen seiner Stirnfläche A in eingefahrener Stellung und seiner Stirnfläche A in ausgefahrener Stellung d.h. in Verriegelungsstellung. Die Bewegungsrichtung des Verriegelungsbolzens 2 ist in der Zeichnung durch einen Doppelpfeil dargestellt.

Im Laschenraum 3 ist unterhalb des Weges des Verriegelungsbolzens 2 ein federnder Auswerfer mit einer Aufsetzfläche 11 für eine Spitze 12 der Lasche 5 angeordnet. Die Aufsetzfläche 11 zeigt zur Öffnung 4 des Laschenraumes 3 und ist in etwa senkrecht zum Laschenweg angeordnet. In soweit entspricht eine erfindungsgemäße Verriegelungseinrichtung einer Verriegelungseinrichtung des Standes der Technik.

Beim Stand der Technik ist der Auswerfer als Blattfeder mit zwei senkrecht zueinander verlaufenden Schenkeln X, Y ausgebildet, wobei der erste Schenkel X im Gehäuse 1 befestigt ist und der zweite Schenkel Y in den Laschenraum 3 ragt und die Aufsetzfläche 11 für die Spitze 12 der Lasche 5 bildet. Der Verriegelungsbolzen 2 des Standes der Technik ist, wie bereits erwähnt, mit einer Anlaufschräge versehen, d.h. seine Stirnfläche A verläuft in Verriegelungsrichtung, d.h. in Richtung Verriegelungsstellung schräg nach unten.

### Erfindungsgemäßes Beispiel 1:

Im Unterschied zum Stand der Technik ist der Auswerfer einer erfindungsgemäßen Verriegelungseinrichtung so ausgebildet, dass er in den Weg des Verriegelungsbolzens 2 ausfahrbar ist. Dazu weist der Auswerfer ein Auswerferelement 13 mit der Aufsetzfläche 11 und eine Schraubenfeder 14 auf, wobei die Schraubenfeder 14 das Auswerferelement 12 auf einer der Aufsetzfläche 11 gegenüberliegenden Seite beaufschlagt. Der durch das Gehäuse 1 gebildete Laschenraum 3 hat die Form eines nach oben offenen Zylinders mit einem Mantel 15 und einem Boden 16. Der Weg des Verriegelungsbolzens 2 verläuft im mittleren Bereich des Zylinders quer, d.h. senkrecht oder in einem Winkel zur Zylinderachse 17 in den Zylinder hinein. Der Verlauf des Weges des Verriegelungsbolzens 2 in Verriegelungsrichtung weicht in diesem Beispiel um wenige Grad nach oben von der Senkrechten zur Zylinderachse 17 ab.

Das Auswerferelement 13 ist als ein an den Laschenraum 3 angepasstes Zylinderelement ausgebildet. Dabei zeigt seine Aufsetzfläche 11 zur Öffnung 4 des Laschenraumes 3. Die Schraubenfeder 14 stützt sich am Boden 16 des Laschenraumes 3 ab und beaufschlagt das Auswerferelement 13 von unten. Der Boden 16 weist eine als kreisförmiger Vorsprung ausgebildete Halterung 18 auf, deren Durchmesser dem Innendurchmesser der Schraubenfeder 14 entspricht.

Der Querschnitt des Auswerferelementes 13 entspricht dem Querschnitt des Laschenraumes 3 derart, dass das Auswerferelement 13 in Richtung der Zylinderachse 17 im Laschenraum 3 des Mantels 15 verschiebbar und durch die Schraubenfeder 14 in den Weg des Verriegelungsbolzens 2 ausfahrbar ist. Dazu sind vom Mantel 15 vorspringende, parallel zur Zylinderachse 17 verlaufende Führungen 19 vorgesehen, die in entsprechende in der Zeichnung nicht sichtbare Einbuchtungen im Auswerferelement 13 greifen.

Das Auswerferelement 13 weist eine sich von der der Aufsetzfläche 11 gegenüberliegenden Fläche weit in das Innere bis in die Nähe der Aufsetzfläche 11 erstreckende Öffnung 20 auf, d.h. das Auswerferelement 13 hat im Wesentlichen die Form eines Hohlzylinders. Dabei ragt die Schraubenfeder 14 in die Öffnung 20, d.h. in das Innere des Hohlzylinders. Die Schraubenfeder 14 ist soweit zusammendrückbar, dass sie sich vollständig im Innern des Hohlzylinders des Auswerferelementes 13 befinden kann.

Eine Mantelfläche des Auswerferelementes 13 weist in einem dem Verriegelungsbolzen 2 zugewandten Bereich eine Aussparung 21 auf. Die Aussparung 21 beginnt bei einer bestimmten Höhe des Auswerferelementes 13 und erstreckt sich nach oben zur Öffnung 4 hin über die restliche Höhe. Sie erstreckt sich in ihrer Breite mindestens über die Breite des Verriegelungsbolzens 2. Durch die Aussparung 21 wird unterhalb ihres Beginns am Auswerferelement 13 ein Vorsprung 22 gebildet.

Die Stirnfläche des Verriegelungsbolzens 2 weist einen senkrecht zu seiner Achse 10 verlaufenden, oberen Abschnitt 23 und einen in Verriegelungsrichtung schräg nach oben verlaufenden unteren Abschnitt 24 auf. Im Bereich der Aussparung 21 verläuft die Mantelfläche des Auswerferelementes 13 dem oberen Abschnitt 23 des Verriegelungsbolzens 2 entsprechend senkrecht zur Achse 10, und am Übergang von der Aussparung 21 zum Vorsprung 22 dem unteren Abschnitt 24 entsprechend schräg nach oben. Dadurch ist zwischen dem Verriegelungsbolzen 2 und dem Auswerferelement 13 ein Formschluß möglich.

Im Mantel 15 des Laschenraumes 3 befindet sich auf der der Öffnung 9, durch die der Verriegelungsbolzen 2 in den Laschenraum 3 ragt, gegenüberliegenden Seite auf Höhe der Achse 10 durch den Verriegelungsbolzens 2 eine weitere Öffnung 25, deren Querschnitt dem Querschnitt des Verriegelungsbolzens 2 entspricht. In Verriegelungsstellung erstreckt sich der Verriegelungsbolzen 2 von der Öffnung 9 durch den Laschenraum 3 bis in diese Öffnung 25. Der Querschnitt des Verriegelungsbolzens 2 ist rund. Der Querschnitt des durch den Laschenraum 3 gebildeten Zylinders ist rechteckig mit abgerundeten Ecken. Er könnte auch eine andere Form, z.B. quadratisch oder rund haben.

Im Betrieb ist in Verriegelungsstellung die Lasche 5 durch den durch ihre Öffnung 6 ragenden, durch die Triebfeder in seiner Stellung gehaltenen Verriegelungsbolzen 2 arretiert. Dabei wird durch die mit ihrer Spitze 12 auf der Aufsetzfläche 11 des Auswerferelementes 13 aufsitzende Lasche 4 die Schraubenfeder 14 vollständig zusammengedrückt. Beim Entriegeln wird der Verriegelungsbolzen 2 elektromotorisch aus der Öffnung 6 der Lasche 5 soweit zurückgefahren, dass er nur noch mit seinem vorderen Ende im Bereich der schrägen Fläche des unteren Abschnitts 24 seiner Stirnfläche in den Laschenraum 3 ragt. Sobald der Verriegelungsbolzen 2 die Lasche 5 freigibt, wird sie mit dem Auswerferelement 13 durch die Federkraft der sich entspannenden Schraubenfeder 14 nach oben gedrückt. Dabei wird das Auswerferelement 13 in den Weg des Verriegelungsbolzens 2 ausgefahren, bis seine Aussparung 21 auf den oberen Abschnitt 23 der Stirnfläche des Verriegelungsbolzens 2 trifft und durch den von dem unteren Abschnitt des Verriegelungsbolzens 2 zurückgehaltenen Vorsprung 22 an einem weiteren Verschieben nach oben gehindert wird. Die Tankklappe kann nun geöffnet werden.

Beim Schließen der Tankklappe wird die Lasche 5 im Laschenraum 3 nach unten bewegt. Dabei trifft sie mit ihrer Spitze 12 auf die Aufsetzfläche 11, die sich bis auf die Aussparung 21 über den gesamten Querschnitt des Laschenraumes 3 erstreckt. Beim weiteren Hinunterdrücken der Lasche 4 wird das Auswerferelement 13 nach unten bewegt und die Schraubenfeder 14 zusammengedrückt. Sobald sich die obere Kante des Auswerferelemtens 13 im Bereich des unteren Abschnitts 24 befindet, bewegt sich der Verriegelungsbolzen 2 entlang seines Weges; und zwar zunächst mit seinem unteren Abschnitt 24 entlang einer oberen Kante des Auswerferelementes 13, über die Aufsetzfläche 11, mit seinem unteren Abschnitt 24 entlang einer unteren Kante der Öffnung 6 der Lasche 5, durch die Öffnung 6 der Lasche 5 bis in die Öffnung 20 im Mantel 15 des Laschenraumes 3 in die Verriegelungsstellung.

### Erfindungsgemäßes Beispiel 2:

Bei einem zweiten erfindungsgemäßen Beispiel ist das Auswerferelement 13 auf der Aufsetzfläche 11 mit einer Erhebung 26 versehen. Die Erhebung 26 schließt sich an die Aussparung 21 an und erstreckt sich über deren Breite. Die Erhebung 26 hat die Form eines schmalen Keils, dessen spitze Kante senkrecht zum Weg des Verriegelungsbolzens 2 und senkrecht zur Zylinderachse (14) verläuft. Eine der Aussparung 21 zugewandte Führungsfläche 27 der Erhebung 26 weist einen in Verriegelungsrichtung schräg nach oben führenden Verlauf auf, der einem kurzen Teilabschnitt des unteren Abschnitts 24 der Stirnfläche des Verriegelungsbolzens 2 entspricht. Im Betrieb wird beim Herunterdrücken der Lasche 4 zum Schließen der Tankklappe der Verriegelungsbolzen 2 sicher über die Führungsfläche 27 der Erhebung 26 und damit sicher über die Aufsetzfläche 11 in die Öffnung 6 der Lasche 5 geführt.

### Bezugszeichenliste

- 1: Gehäuse
- 2: Verriegelungsbolzen
- 3: Laschenraum
- 4: Öffnung
- 5: Lasche
- 6: Öffnung der Lasche
- 7: Bodenabschnitt
- 8: Schenkelabschnitt
- 9: Öffnung
- 10: Achse
- 11: Aufsetzfläche
- 12: Spitze der Lasche
- 13: Auswerferelement
- 14: Schraubenfeder
- 15: Mantel
- 16: Boden
- 17: Zylinderachse
- 18: Halterung
- 19: Führung
- 20: Öffnung
- 21: Aussparung
- 22: Vorsprung
- 23: oberer Abschnitt
- 24: unterer Abschnitt
- 25: Öffnung
- 26: Erhebung
- 27: Führungsfläche

### Stand der Technik

- T: Tankklappe
- X: Schenkel der Blattfeder
- Y: Schenkel der Blattfeder
- A: Stirnfläche des Verriegelungsbolzens

## Patentansprüche

1. Verriegelungseinrichtung für eine Tankklappe (T) mit einem Gehäuse (1), in dem ein elektromotorischer Stellantrieb mit einem Verriegelungsbolzen (2) angeordnet ist,
- wobei durch das Gehäuse (1) ein mit einer Öffnung (4) versehener Laschenraum(3) zur Aufnahme einer von der Tankklappe(T) abstehenden Lasche (5) gebildet ist,
- wobei die Öffnung (4) der Tankklappe (T) zugewandt ist,
- wobei der Verriegelungsbolzen (2) durch eine Triebfeder in den Laschenraum (3) ausfahrbar und elektromotorisch zurückfahrbar ist,
- wobei in dem Laschenraum (3) auf der der Tankklappe (T) abgewandten Seite des Verriegelungsbolzens (2) ein federnder Auswerfer (13,14) angeordnet ist,
**dadurch gekennzeichnet,**
**dass** der Auswerfer (13,14) bei zurückgefahrenem Verriegelungsbolzen (2) durch Federkraft in den Weg des Verriegelungsbolzens (2) ausfährt, um diesen bis zum Schließen der Tankklappe (T) in der zurückgezogenen Position zu halten.

2. Verriegelungseinrichtung nach Anspruch 1, **dadurch gekennzeichnet, dass** der Auswerfer ein Auswerferelement (13) mit einer Aufsetzfläche (11) und eine Schraubenfeder (14) aufweist, wobei das Auswerferelement (13) auf der der Aufsetzfläche (11) gegenüberliegenden Seite durch die Schraubenfeder (14) beaufschlagt ist.

3. Verriegelungseinrichtung nach Anspruch 2, **dadurch gekennzeichnet, dass** das Auswerferelement (13) eine Öffnung (20) aufweist, in die die Schraubenfeder (14) hineinragt.

4. Vorrichtung nach Anspruch 2 oder 3, **dadurch gekennzeichnet, dass** der Laschenraum zylinderförmig ausgebildet ist, wobei der Weg des Verriegelungsbolzens (2) im mittleren Bereich des Zylinders quer zur Zylinderachse (15) verläuft, und dass das Auswerferelement (11) als ein an den Laschenraum (3) angepasstes Zylinderelement ausgebildet und durch die sich am Boden des Laschenraumes (3) abstützende Schraubenfeder (14) beaufschlagt ist.

5. Vorrichtung nach Anspruch 4, **dadurch gekennzeichnet, dass** eine Mantelfläche des Auswerferelementes (13) in einem dem Verriegelungsbolzen (2) zugewandten Bereich eine einen unteren Vorsprung (22) bildende, sich über die restliche Höhe des Auswerferlementes (13) und mindestens über die Breite des Verriegelungsbolzens erstreckende Aussparung (21) aufweist.

6. Verriegelungseinrichtung nach einem der Ansprüche 1 bis 5, **dadurch gekennzeichnet, dass** eine Stirnfläche des Verriegelungsbolzen (2) einen in Verriegelungsrichtung schräg nach oben verlaufenden, unteren Abschnitt (24) aufweist.

7. Verriegelungseinrichtung nach Anspruch 6, **dadurch gekennzeichnet, dass** die Mantelfläche des Auswerferelement (13) am Übergang von der Aussparung (21) zum Vorsprung (22) einen dem unteren Abschnitt (24) entsprechenden Verlauf aufweist.

8. Verriegelungseinrichtung nach Anspruch 6 oder 7, **dadurch gekennzeichnet, dass** die Aufsetzfläche (11) des Auswerferelementes (13) eine Erhebung (26) mit einer Führungsfläche (27) aufweist, deren Verlauf dem unteren Abschnitt (24) entspricht.

9. Verriegelungseinrichtung nach einem der Ansprüche 4 bis 8, **gekennzeichnet durch** Führungen am Mantel (15) des Laschenraumes (3) für das Auswerferelement (13).

10. Verriegelungseinrichtung nach einem der Ansprüche 2 bis 9, **gekennzeichnet durch** eine Halterung (18) am Boden (16) des Laschenraumes (3) für die Schraubenfeder (14).

11. Verriegelungseinrichtung nach einem der Ansprüche 1 bis 10, **gekennzeichnet durch** eine dem Querschnitt des Verriegelungsbolzens (2) entsprechende Öffnung (25) im Mantel (15) des Laschenraumes (3).

## Claims

1. Locking device, for a fuel cap (T), with a housing (1), in which there is a setting motor with a locking pin and that is based on an electromotor,
- whereby a tongue space (3), which has an opening (4) to take up a tongue (5) projecting from the fuel cap (T), is formed by means of the housing (1),
- whereby the opening (4) faces the fuel cap (T),
- whereby the locking pin (2) can be extended, by means of a driving spring, into the tongue space (2) and can be withdrawn by means of an electromotor,
- whereby there is a springing ejector (13, 14) in the tongue space (3) on the side of the locking pin (2) facing away from the fuel cap (T),
**characterized in that**
the ejector (13, 14), when the locking pin (2) is drawn back, extends into the path of the locking pin (2), under spring loading, in order to hold the said locking pin (2) in the withdrawn position until the fuel cap (T) is closed.

2. Locking pin in accordance with claim 1, **characterized in that** the ejector has an ejector element (13) with an abutment face (11) and a helical spring (14), whereby the ejector element (13) is stressed by the helical spring (14) on the side lying opposite the abutment face (11).

3. Locking device in accordance with claim 2, **characterized in that** the ejector element (13) has an opening (20) into which the helical spring (14) projects.

4. Locking device in accordance with claims 2 or 3, **characterized in that** the tongue space is cylindrical, whereby the path of the locking pin (2) in the central area of the cylinder runs transversely in relation to the axis of the cylinder (15), and **in that** the ejector element (11) is in the form of a cylinder element adapted to the tongue space (3), and is stressed by the helical spring (14) that is supported on the floor of the tongue space (3).

5. Device in accordance with claim 4, **characterized in that** a surface of the ejector element (13) has, in an area that faces the locking pin (2), a recess (21) forming a lower projection and extending over the remaining height of the ejector element (13) and at least over the width of the locking pin.

6. Locking device in accordance with one of claims 1 to 5, **characterized in that** an end face of the locking pin (2) has a lower section (24) running at an inclined upward angle in the locking direction.

7. Locking device in accordance with claim 6, **characterized in that** the surface of the ejector element (13) follows, at the transition from the recess (21) into the projection (22), a course corresponding to the lower section (24).

8. Locking device in accordance with claims 6 or 7, **characterized in that** the abutment face (11) of the ejector element (13) has an elevation (26) with a guide face (27), the course of which corresponds to the lower section (24).

9. Locking device in accordance with one of claims 4 to 8, **characterized by** guiding means, for the ejector element, on the surface (15) of the tongue space (3).

10. Locking device in accordance with one of claims 2 to 9, **characterized by** a holding means (18), on the floor (16) of the tongue space (3), for the helical spring (14).

11. Locking device in accordance with one of claims 1 to 10, **characterized by** an opening (25), in the surface (15) of the tongue space (3), corresponding to the cross-sectional area of the locking pin (2).

## Revendications

1. Dispositif de verrouillage pour une trappe de réservoir (T), comportant un boîtier (1) dans lequel est agencé un organe de réglage à moteur électrique avec un goujon de verrouillage (2),
- un compartiment à patte (3) pourvu d'une ouverture (4), destiné à recevoir une patte (5) faisant saillie hors de la trappe de réservoir (T) étant formé à travers le boîtier,
- l'ouverture (4) étant orientée en direction de la trappe de réservoir (T)
- le goujon de verrouillage (2) pouvant être sorti dans le compartiment à patte (3) par un ressort-moteur et rentré par moteur électrique,
- un éjecteur à effet ressort (13, 14) étant agencé dans le compartiment à patte (3) sur le côté du goujon de verrouillage (2) opposé à la trappe de réservoir (T),
**caractérisé en ce que** l'éjecteur (13,14) est sorti dans le trajet du goujon de verrouillage (2) par effet ressort, lorsque le goujon de verrouillage (2) est rentré, pour maintenir ce dernier en position de retrait jusqu'à la fermeture de la trappe de réservoir (T).

2. Dispositif de verrouillage selon la revendication 1, **caractérisé en ce que** l'éjecteur présente un élément d'éjection (13) avec une surface de pose (11) et un ressort hélicoïdal (14), l'élément d'éjection (13) étant sollicité par le ressort hélicoïdal (14) sur la face opposée à la surface de pose (11).

3. Dispositif de verrouillage selon la revendication 2, **caractérisé en ce que** l'élément d'éjection (13) présente une ouverture (20) dans laquelle fait saillie le ressort hélicoïdal (14).

4. Dispositif de verrouillage selon l'une ou l'autre des revendications 2 et 3, **caractérisé en ce que** le compartiment à patte est réalisé de forme cylindrique, le trajet du goujon de verrouillage (2) s'étendant dans la région médiane du cylindre transversalement à l'axe de cylindre (15), et **en ce que** l'élément d'éjection (11) est réalisé sous forme d'élément de cylindre adapté au compartiment à patte (3) et est sollicité par le ressort hélicoïdal (14) prenant appui sur le fond du compartiment à patte (3).

5. Dispositif selon la revendication 4, **caractérisé en ce qu'**une surface enveloppe de l'élément d'éjection (13) présente dans une région tournée vers le goujon de verrouillage (2) un évidement (21) formant une saillie inférieure (22) et s'étendant sur le reste de la hauteur de l'élément d'éjection (13) et au moins sur la largeur du goujon de verrouillage.

6. Dispositif de verrouillage selon l'une des revendications 1 à 5, **caractérisé en ce qu'**une face frontale du goujon de verrouillage (2) présente en direction de verrouillage un tronçon inférieur (24) s'étendant en oblique vers le haut.

7. Dispositif de verrouillage selon la revendication 6, **caractérisé en ce que** la surface enveloppe de l'élément d'éjection (13) présente, à la transition entre l'évidement (21) et la saillie (22), un tracé correspondant à celui du tronçon inférieur (24).

8. Dispositif de verrouillage selon l'une ou l'autre des revendications 6 et 7, **caractérisé en ce que** la surface de pose (11) de l'élément d'éjection (13) présente un relief (26) avec une surface de guidage (27) dont le tracé correspond à celui du tronçon inférieur (24).

9. Dispositif de verrouillage selon l'une des revendications 4 à 8, **caractérisé par** des guidages sur l'enveloppe (15) du compartiment à patte (3) pour l'élément d'éjection (13).

10. Dispositif de verrouillage selon l'une des revendications 2 à 9, **caractérisé par** une monture (18) sur le fond (16) du compartiment à patte (3) pour le ressort hélicoïdal (14).

11. Dispositif de verrouillage selon l'une des revendications 1 à 10, **caractérisé par** une ouverture (25), correspondant à la section transversale du goujon de verrouillage (2), dans l'enveloppe (15) du compartiment à patte (3).
